# EUROPEAN PATENT SPECIFICATION

(11) **EP 3 330 913 B1**
(45) Date of publication and mention of the grant of the patent: **05.05.2021**
(21) Application number: 16201358.5
(22) Date of filing: 30.11.2016
(51) Int. Cl.: G06Q 20/20

(54) **METHOD AND DEVICE FOR CONTROLLING THE ACCESS TO AND CONFIGURATION OF POINT OF SALE PERIPHERALS**
VERFAHREN UND VORRICHTUNG ZUR STEUERUNG DES ZUGRIFFS AUF UND DER KONFIGURATION VON VERKAUFSSTELLENPERIPHERIEGERÄTEN
PROCÉDÉ ET DISPOSITIF DE COMMANDE D'ACCÈS AUX ET DE CONFIGURATION DES PÉRIPHÉRIQUES DE POINT DE VENTE

(43) Date of publication of application: 06.06.2018
(73) Proprietor: Wincor Nixdorf International GmbH, 33106 Paderborn (DE)
(72) Inventor: SCHULTZE, Manuel, 33161 Hövelhof (DE); MISIEK, Janusz, 43-300 Bielsko Biala (PL)

(56) References cited:
- US-A1- 2003 135 418
- US-A1- 2014 006 189

## Description

### Field of the Invention

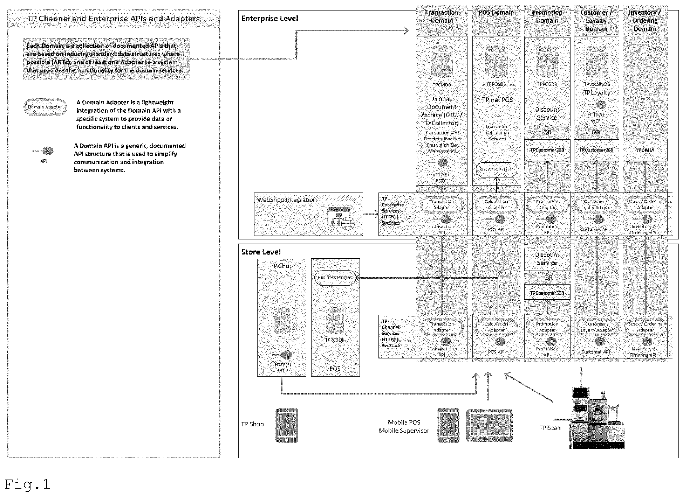

In the retail field not only the Point of Sale (POS) devices play an important role but also the framework behind these devices as it can be derived from Fig. 1-2. The Figures 1-2 show the layers and the structure of retail system infrastructure from the POS to the enterprise resource planning (ERP).

The point sale (POS) or point of purchase (POP) is the time and place where a retail transaction is completed. At the point of sale, the merchant would calculate the amount owed by the customer and indicate the amount, and may prepare an invoice for the customer (which may be a cash register printout), and indicate the options for the customer to make payment. It is also the point at which a customer makes a payment to the merchant in exchange for goods or after provision of a service. After receiving payment, the merchant may issue a receipt for the transaction, which is usually printed, but is increasingly being dispensed with or sent electronically.

To calculate the amount owed by a customer, the merchant may use any of a variety of aids available, such as weighing scales, bar code scanners, electronic and manual cash registers. To make a payment, EFT/POS terminals, touch screens and a variety of other hardware and software options are available.

The point of sale is often referred to as the point of service because it is not just a point of sale but also a point of return or customer order. Additionally, current POS terminal software may include additional features to cater for different functionality, such as inventory management, CRM, financials, or warehousing.

Businesses are increasingly adopting POS systems and one of the most obvious and compelling reasons is that a POS system does away with the need for price tags. Selling prices are linked to the product code of an item when adding stock, so the cashier merely needs to scan this code to process a sale. If there is a price change, this can also be easily done through the inventory window. Other advantages include ability to implement various types of discounts, a loyalty scheme for customers and more efficient stock control.

As it can be derived from the figures one approach is to provide services which allow extendibility, scalability, performance and security. This is done by a service framework which provides to customers and projects standardized public interfaces to the outside world and connect any enterprise application via its extendable adapter framework, thus making touch-point enterprise system agnostic and reducing touch-point customization to a minimum.

The services provide real added value to retailers as it provides and exposes centralized business logic and domain data to all their systems, thus providing a consistent customer experience across all channels independent of the touch-point used.

Next to the consistency, the services also reduce architecture complexity, point-to-point connectivity and allow projects to easily extend business functionality in an isolated and controlled manner reducing project risks and costs.

Based on this full flexibility layer approach it is intended that the peripheral devices which are in general connected to a POS can also be used in a flexible manner. Normally the POS have several peripheral devices which are connected via serial cable/USB/Bluetooth/IrDA etc. to a mainboard which is very often a standard PC board on which a standard operating system is running. This operating system implements the POS functionality. The peripheral devices are normally exclusively assigned to the POS so that no sharing of the devices with other POS is possible. Especially for mobile POS or virtual POS that run on a tablet or any other mobile device it is from time to time necessary to connect to the peripheral devices of the local POS.

US 2014/0006189 A1 and US 2003/1354418 A1 disclose pairing concepts of mobile POS and external devices.

### Summary of Invention

The object of the invention is to improve the usability of the peripheral devices and the flexibility of their assignment.

The problem is solved by an invention according to the claims.

It has to be noted that the device server is a service which can run on a central computer system which is accessible by all POS. In general the device service is connected via a network to the other components. By the use of this central device service the logical local control of the peripheral devices by the POS is broken. The POS does not control directly the information flow and the assignment of the peripheral devices to the POS. This is done by the central device server.

To allow this central control of all peripheral devices plug-ins on the POS are stored and running that are responsible for controlling the access to the peripheral devices and which establish the connection to the central device service. In general tunneling of information is performed.

To allow a transfer of the devices to other POS it is checked whether a transaction is pending and the peripheral device is assigned to a POS system. If this is the case, a message is sent to the POS when another POS system is requesting the peripheral device. The device server sends a confirmation message to the POS system to which the peripheral device is assigned requesting a confirmation to release the device. In general this message is displayed on a monitor of the POS system, and the user is requested to allow that the peripheral device is transferred to another POS.
When the user agrees the peripheral device is transferred.

When no response to the confirmation message is sent for a predetermined time interval the peripheral device is removed from the POS system and assigned to the other POS system.

The devices comprise one or more of the following:
POS printer; Line display; Scale; Fiscal printer; Scanner; Cash drawer.

To implement the tunneling the POS systems to which one or more peripheral devices are physically connected a device service is running that controls the communication to the device server and the peripheral devices and supports the assignment of the device server. The device service tunnels the communication between the device server and the peripheral devices, so that the POS system does not directly communicate with the connected peripheral devices but with the device service and the device server.

In addition and in combination with the handling devices POS peripherals can be also accessed through a web interface based on REST and web socket communication provided by the Device Service. It allows sharing these devices between the POS and web applications like Mobile POS.

According to the invention it is possible to access the following peripherals via the Device Service on POS:
□ POS printer
□ Fiscal printer
□ Customer line display
□ Scale Transaction Module (price calculating scale)
□ EFT/POS device

By default the POS peripherals are connected via UPOS except for the Fiscal printer and the Scale Transaction Module which are connected via OPOS , RFID or EFT, which are connected through the Device Service. When the Scale Transaction Module is connected via Device Service, it is necessary that the POS printer is also connected through the Device Service.

The sharing of POS peripherals with the mobile devices is in general only possible if the peripherals are connected via the Device Service. To share the peripherals between stationary POS and mobile devices, the concept of *"leading system"* has been introduced. The leading system concept means that when a system, being it a stationary POS or a mobile device, is currently in the middle of a transaction, it will automatically decline an incoming request to use the peripheral that workstation or mobile device is using. Subsequently, if said system is not in the middle of a transaction, the request may be granted or denied by the operator currently using the requested peripheral. It is possible to configure that the request is automatically granted in case the currently connected system doesn't respond with X amount of seconds. Besides during a transaction, sharing is not possible when printing has been started, during an EFT payment and during the weighing of an item.

The device server is able to offer the peripherals to the Mobile POS and the traditional POS.

To avoid implementing the device integrations twice, one for the POS and again for the device server, the business logic is implemented as plug-ins. This plug-in can be used by the POS and by the Mobile POS (or any other client such as the iSCAN Adapter) and use the same business logic, this has following advantages:
▪ one point of configuration
▪ same output independent of the client platform
▪ reduced development effort

The device server supports the Mobile POS and the traditional POS, for this, the following features have been implemented:
▪ New sharing concept. Leading system and new business rules introduced.
▪ New Plug-in concept. The POS and the Mobile POS shares the same implementation based on plug-ins. The same presentation is used and the same parameters are applied to all clients. No need for separate configurations.

The POS printer logic is refactored into plug-ins, the traditional POS can switch in the POS model to use the UDM connection or the Device Server. When the POS connects to the device server, it will be able to share the printer with other clients configured to use also this device server. Usually the traditional POS will be configured as leading system so that the printer is the most of the time assigned to the POS.

The Scale Transaction Module has been integrated in the device server so that the use of scales is granted and to get information about the supported models and countries.

The device server takes care only on the routing and the definition of the interface that the clients can use. The concrete implementation of the methods, which indeed implies the transformation of the EFT messages to the concrete EFT protocol (e.g. OPI ...) is done in business logic components (plug-ins). These plug-ins can be easily modified or enhanced by the customizers to make adaptations to the existing protocol or to create a complete new protocol integration.

### Brief Description of Drawings

Fig.1 shows a representation of a layer structure of the invention, and the POS with its connection;
Fig. 2 is an alternative representation of the layer structure;
Fig. 3 shows a layer structure in the POS and the connection to the device service;
Fig. 4 shows a detailed structure of the device service with the tunnel of an EFT/POS to provide the control of the devices to the device service.

### Detailed Description of Preferred Embodiments

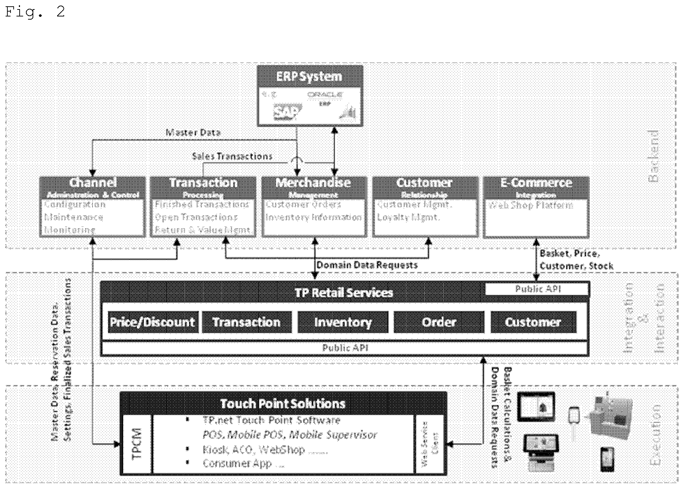

Figure 1 shows a structure of the system comprising transaction domain, POS domain, promotion domain, customer/loyalty domain, inventory/ordering domain. These domains have different functionalities for different purposes. As it can be seen from figure 2 these domains are part of the integration and interaction level. This level is logically located between the back-end and the execution level. In the execution level the POS are located. The POS cover also web approaches, mobile POS, stationary POS and TPiSCAN devices. TPiSCAN are self-checkout devices which allow the customer to scan the products and to generate an invoice by himself without the support of any staff of the shop. All these units are connected to the POS domain. In this POS domain adapters are located which provide APIs to allow plug-ins to be implemented which can cover various POS types and their devices.

Figure 2 shows another representation of the different levels. The backend system comprises the ERP system wherein the integration and interaction level comprise an integration for the POS in the execution level, including the POS and its adapter especially also the device service.

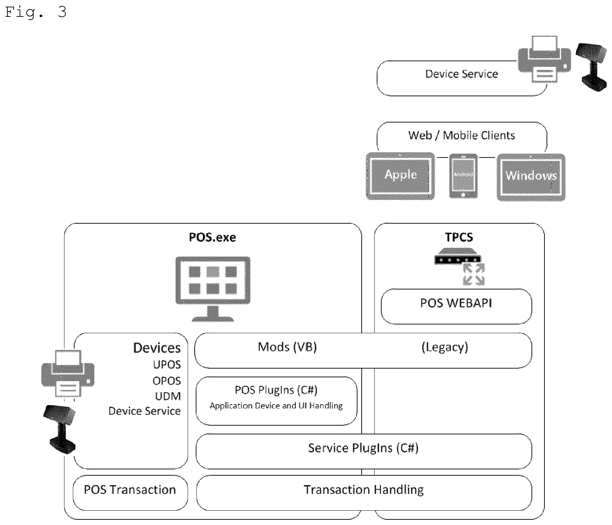

Figure 3 shows on the one hand the POS and the servers running on the POS namely POS.exe. POS plug-ins on the POS implement the service on the POS which is connected to the device service. As it can be derived from Figure 3 the transaction handling is also running on the POS which indicates that transaction is pending and that the peripheral devices cannot be used by other POS. This information is provided to the device service. Mobile clients which are for example web clients can then request from the device service the peripheral devices connected to the POS and controlled by the POS.exe. To provide an integrated approach which allows access to different devices from different clients several layers have to be implemented on the services running on the POS. On the one hand there are service plug-ins, POS plug-ins and plug-ins to support legacy devices. Also there must be a connection to the device service.

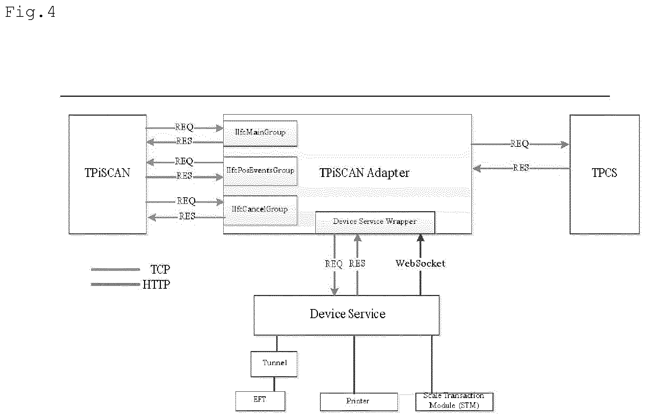

Figure 4 shows the central device service to which the printer and the scale transaction module is connected. The POS/EFT is connected via tunnel to the device service. The device service is connected to a TPiSCAN in this configuration using a device service wrapper which is a layer using standard API. The device service wrapper is the service running on the TPiSCAN device which allows the connection to the device service. The device service allows the TPiSCAN to request for a printer or scale transaction module. These physical devices can be normally connected to an EFT/POS. By using a tunnel this devices can be transparently presented to the TPiSCAN. Transparently means in this context that it is not visible to the POS to which the physical devices are connected.

## Claims

1. Method for configuring a POS system, which needs when in use several peripheral devices to complete a transaction, using a device server at which all peripheral devices are registered and to be logically connected to a POS system, comprising the steps:
- before starting a transaction on the POS system, requesting the peripheral devices from the device server to assign the devices to the POS system;
- if the request is granted starting the transaction and informing the device server about the start of the transaction for blocking the access to the peripheral devices for another POS systems;
- providing a transaction handling running on the POS indicating that a transaction is pending and that the peripheral devices cannot be used by other POS, and providing this transaction information to the device server,
- when a request for peripheral device from another POS system is received at the device server, it is checked if a transaction is pending for the peripheral device and in case the transaction is pending the request is automatically declined and if no transaction is pending the device is assigned to the other POS system;
wherein on the POS systems to which one or more peripheral devices are physically connected a device service is running that controls the communication to the device server and the peripheral devices and supports the assignment of the device server.
wherein the device service tunnels the communication between the device server and the peripheral devices, so that the POS system does not directly communicate with the connected peripheral devices but with the device service and the device server.

2. The method according to claim 1, wherein when no transaction is pending and the peripheral device is assigned to a POS system and when another POS system is requesting the peripheral device the device server sends a confirmation message to the POS system to which the peripheral device is assigned requesting a confirmation to release the device and which is displayed on a monitor of the POS system, and requesting a response of the user.

3. The method according to claim 2, when no response to the confirmation message is sent for a predetermined time interval the peripheral device is removed from the POS system and reassigned to the other POS system.

4. The method according to any of the preceding claims
wherein the devices comprise one or more of the following: POS printer; Line display; Scale; Fiscal printer; Scanner; Cash drawer.

5. System for configuring POS system, wherein the POS system needs when in use several peripheral devices to complete a transaction, comprising at least two POS, at least one using a device server at which all peripheral devices are registered and to be logically connected to a POS system, comprising a configuration that allows the following:
- before starting a transaction on the POS system, requesting the peripheral devices from the device server to dedicate the devices to the POS system;
- if the request is granted starting the transaction and informing the device server about the start of the transaction for blocking the access to the peripheral devices for another POS systems;
- providing a transaction handling running on the POS indicating that a transaction is pending and that the peripheral devices cannot be used by other POS, and providing this transaction information to the device server,
- when a request for peripheral device from another POS system is received at the device server, it is checked if a transaction is pending for the peripheral device and in case the transaction is pending the request is automatically declined and if no transaction is pending the device is assigned to the other POS system,
wherein on the POS systems to which one or more peripheral devices are physically connected a device service is running that controls the communication to the device server and the peripheral devices and supports the assignment of the device server,
wherein the device service tunnels the communication between the device server and the peripheral devices, so that the POS system does not directly communicate with the connected peripheral devices but with the device service and the device server.

6. The System according to claim 5, wherein when no transaction is pending and the peripheral device is assigned to a POS system and when another POS system is requesting the peripheral device the device server is configured to send a confirmation message to the POS system to which the peripheral device is assigned requesting a confirmation to release the device and which is displayed on a monitor of the POS system, and requesting a response of the user.

7. The System according to claim 6, when no response to the confirmation message is sent for a predetermined time interval the peripheral device is removed from the POS system and reassigned to the other POS system.

8. The System according to any of the preceding system claims wherein the devices comprise one or more of the following: POS printer; Line display; Scale; Fiscal printer; Scanner; Cash drawer.

## Patentansprüche

1. Verfahren zum Konfigurieren eines POS-Systems, das dann, wenn es in Gebrauch ist, mehrere Peripheriegeräte benötigt, um eine Transaktion abzuschließen, und einen Vorrichtungs-Server verwendet, bei dem alle Peripheriegeräte registriert sind und mit einem POS-System logisch zu verbinden sind, das die folgenden Schritte umfasst:
- vor dem Starten einer Transaktion auf dem POS-System Anfordern der Peripheriegeräte von dem Vorrichtungs-Server, um die Vorrichtungen dem POS-System zuzuweisen;
- dann, wenn die Anforderung gewährt wurde, Starten der Transaktion und Informieren des Vorrichtungs-Servers über den Start der Transaktion zum Blockieren des Zugriffs auf die Peripheriegeräte für andere POS-Systeme;
- Bereitstellen einer Transaktionsabwicklung, die auf dem POS läuft und die angibt, dass eine Transaktion anhängig ist und dass die Peripheriegeräte nicht durch andere POS verwendet werden können, und Liefern dieser Transaktionsinformationen an den Vorrichtungs-Server,
- dann, wenn eine Anforderung für ein Peripheriegerät von einem anderen POS-System bei dem Vorrichtungs-Server empfangen wird, Überprüfen, ob eine Transaktion für das Peripheriegerät anhängig ist, und in dem Fall, in dem die Transaktion anhängig ist, automatisches Ablehnen der Anforderung, und dann, wenn keine Transaktion anhängig ist, Zuweisen der Vorrichtung zu dem anderen POS-System;
wobei auf den POS-Systemen, mit denen ein oder mehrere Peripheriegeräte physikalisch verbunden sind, ein Vorrichtungs-Dienst läuft, der die Kommunikation zu dem Vorrichtungs-Server und den Peripheriegeräten steuert und die Zuweisung des Vorrichtungs-Servers unterstützt, wobei der Vorrichtungsdienst die Kommunikation zwischen dem Vorrichtungs-Server und den Peripheriegeräten tunnelt, so dass das POS-System nicht unmittelbar mit den verbundenen Peripheriegeräten, sondern mit dem Vorrichtungsdienst und dem Vorrichtungs-Server, kommuniziert.

2. Verfahren nach Anspruch 1, wobei dann, wenn keine Transaktion anhängig ist und das Peripheriegerät einem POS-System zugewiesen ist und wenn ein anderes POS-System das Peripheriegerät anfordert, der Vorrichtungs-Server eine Bestätigungsnachricht an das POS-System sendet, dem das Peripheriegerät zugewiesen ist, die eine Bestätigung anfordert, die Vorrichtung freizugeben, und die auf einem Monitor des POS-Systems angezeigt wird und eine Antwort des Anwenders anfordert.

3. Verfahren nach Anspruch 2, wobei dann, wenn keine Antwort auf die Bestätigungsnachricht für ein vorbestimmtes Zeitintervall gesendet wird, das Peripheriegerät von dem POS-System entfernt wird, und dem anderen POS-System neuzugewiesen wird.

4. Verfahren nach einem der vorhergehenden Ansprüche, wobei die Vorrichtungen eines oder mehrere des Folgenden umfassen:
einen POS-Drucker; eine Zeilenanzeige; eine Skala; einen Finanzdrucker; einen Scanner; eine Kassenschublade.

5. System zum Konfigurieren eines POS-Systems, wobei das POS-System dann, wenn es in Gebrauch ist, mehrere Peripheriegeräte benötigt, um eine Transaktion abzuschließen, das mindestens zwei POS umfasst, wobei mindestens eines einen Vorrichtungs-Server verwendet, bei dem alle Peripheriegeräte registriert sind und um mit einem POS-System logisch verbunden zu sein, das eine Konfiguration umfasst, die Folgendes erlaubt:
- vor dem Starten der Transaktion auf dem POS-System Anfordern der Peripheriegeräte von dem Vorrichtungs-Server, um die Vorrichtungen für das POS-System zu reservieren;
- dann, wenn die Anforderung gewährt wurde, Starten der Transaktion und Informieren des Vorrichtungs-Servers über den Start der Transaktion zum Blockieren des Zugriffs auf die Peripheriegeräte für andere POS-Systeme;
- Bereitstellen einer Transaktionsabwicklung, die auf dem POS läuft, die angibt, dass eine Transaktion anhängig ist und dass die Peripheriegeräte nicht durch andere POS verwendet werden können und Liefern dieser Transaktionsinformationen an den Vorrichtungs-Server,
- dann, wenn eine Anforderung für ein Peripheriegerät von einem anderen POS-System bei dem Vorrichtungs-Server empfangen wird, Überprüfen, ob eine Transaktion für das Peripheriegerät anhängig ist, und im Fall, in dem die Transaktion anhängig ist, automatisches Ablehnen der Anforderung, und dann, wenn keine Transaktion anhängig ist, Zuweisen der Vorrichtung zu dem anderen POS-System, wobei auf den POS-Systemen, mit denen ein oder mehrere Peripheriegeräte physikalisch verbunden sind, ein Vorrichtung-Dienst läuft, der die Kommunikation mit dem Vorrichtungs-Server und den Peripheriegeräten steuert und die Zuweisung des Vorrichtungs-Servers unterstützt, wobei der Vorrichtungsdienst die Kommunikation zwischen dem Vorrichtungs-Server und den Peripheriegeräten tunnelt, so dass das POS-System nicht unmittelbar mit den verbundenen Peripheriegeräten, sondern mit dem Vorrichtungsdienst und dem Vorrichtungs-Server, kommuniziert.

6. System nach Anspruch 5, wobei dann, wenn keine Transaktion anhängig ist und das Peripheriegerät einem POS-System zugewiesen ist und wenn ein anderes POS-System das Peripheriegerät anfordert, der Vorrichtungs-Server konfiguriert ist, eine Bestätigungsnachricht an das POS-System zu senden, dem das Peripheriegerät zugewiesen ist, die eine Bestätigung anfordert, die Vorrichtung freizugeben, und die auf einem Monitor des POS-Systems angezeigt wird und eine Antwort des Anwenders anfordert.

7. System nach Anspruch 6, wobei dann, wenn keine Antwort auf die Bestätigungsnachricht für ein vorbestimmtes Zeitintervall gesendet wird, das Peripheriegerät von dem POS-System entfernt wird und dem anderen POS-System neu zugewiesen wird.

8. System nach einem der vorhergehenden Systemansprüche, wobei die Vorrichtungen eines oder mehrere des Folgenden umfassen:
einen POS-Drucker; eine Zeilenanzeige; eine Skala; einen Finanzdrucker; einen Scanner; eine Kassenschublade.

## Revendications

1. Procédé de configuration d'un système POS qui nécessite, en cours d'utilisation, plusieurs dispositifs périphériques pour accomplir une transaction, à l'aide d'un serveur de dispositifs au niveau duquel tous les dispositifs périphériques sont inscrits et destinés à être logiquement connectés à un système POS, comportant les étapes consistant :
- avant de commencer une transaction sur le système POS, à demander les dispositifs périphériques au serveur de dispositifs pour affecter les dispositifs au système POS ;
- si la demande est acceptée, à commencer la transaction et à informer le serveur de dispositifs du début de la transaction pour bloquer l'accès aux dispositifs périphériques pour un autre système POS ;
- à mettre en place une gestion de transaction s'exécutant sur le POS indiquant qu'une transaction est en instance et que les dispositifs périphériques ne peuvent pas être utilisés par l'autre POS, et à fournir cette information de transaction au serveur de dispositifs,
- lorsqu'une demande de dispositif périphérique provenant d'un autre système POS est reçue au niveau du serveur de dispositifs, à vérifier si une transaction est en instance pour le dispositif périphérique et dans le cas où la transaction est en instance, à décliner automatiquement la demande et si aucune transaction n'est en instance, à affecter le dispositif à l'autre système POS ;
un service de dispositifs s'exécutant sur les systèmes POS auxquels un ou plusieurs dispositifs périphériques sont physiquement connectés, qui commande la communication vers le serveur de dispositifs et les dispositifs périphériques et prend en charge l'affectation du serveur de dispositifs,
le service de dispositif acheminant via un tunnel la communication entre le serveur de dispositifs et les dispositifs périphériques, de telle façon que le système POS ne communique pas directement avec les dispositifs périphériques connectés mais avec le service de dispositifs et le serveur de dispositifs.

2. Procédé selon la revendication 1, le serveur de dispositifs envoyant, lorsqu'aucune transaction n'est en instance et que le dispositif périphérique est affecté à un système POS et lorsqu'un autre système POS demande le dispositif périphérique, un message de confirmation au système POS auquel le dispositif périphérique est affecté demandant une confirmation pour libérer le dispositif, celui-ci étant affiché sur un moniteur du système POS, et demandant une réponse de l'utilisateur.

3. Procédé selon la revendication 2, le dispositif périphérique étant, lorsqu'aucune réponse au message de confirmation n'est envoyée pendant un intervalle de temps prédéterminé, retiré du système POS et réaffecté à l'autre système POS.

4. Procédé selon l'une quelconque des revendications précédentes, les dispositifs comportant un ou plusieurs des éléments suivants : imprimante POS ; affichage en ligne ; balance ; imprimante de reçus ; lecteur ; tiroir-caisse.

5. Système de configuration d'un système POS, le système POS nécessitant, en cours d'utilisation, plusieurs dispositifs périphériques pour accomplir une transaction, comportant au moins deux POS, au moins l'un d'eux utilisant un serveur de dispositifs au niveau duquel tous les dispositifs périphériques sont inscrits et destinés à être logiquement connectés à un système POS, comportant une configuration qui permet les actions suivantes :
- avant de commencer une transaction sur le système POS, demander les dispositifs périphériques au serveur de dispositifs pour dédier les dispositifs au système POS ;
- si la demande est acceptée, commencer la transaction et informer le serveur de dispositifs du début de la transaction pour bloquer l'accès aux dispositifs périphériques pour un autre système POS ;
- mettre en place une gestion de transaction s'exécutant sur le POS indiquant qu'une transaction est en instance et que les dispositifs périphériques ne peuvent pas être utilisés par l'autre POS, et fournir cette information de transaction au serveur de dispositifs,
- lorsqu'une demande de dispositif périphérique provenant d'un autre système POS est reçue au niveau du serveur de dispositifs, vérifier si une transaction est en instance pour le dispositif périphérique et dans le cas où la transaction est en instance, décliner automatiquement la demande et si aucune transaction n'est en instance, affecter le dispositif à l'autre système POS,
un service de dispositifs s'exécutant sur les systèmes POS auxquels un ou plusieurs dispositifs périphériques sont physiquement connectés, qui commande la communication vers le serveur de dispositifs et les dispositifs périphériques et prend en charge l'affectation du serveur de dispositifs,
le service de dispositif acheminant via un tunnel la communication entre le serveur de dispositifs et les dispositifs périphériques, de telle façon que le système POS ne communique pas directement avec les dispositifs périphériques connectés mais avec le service de dispositifs et le serveur de dispositifs.

6. Système selon la revendication 5, le serveur de dispositifs étant configuré, lorsqu'aucune transaction n'est en instance et que le dispositif périphérique est affecté à un système POS et lorsqu'un autre système POS demande le dispositif périphérique, pour envoyer un message de confirmation au système POS auquel le dispositif périphérique est affecté demandant une confirmation pour libérer le dispositif, celui-ci étant affiché sur un moniteur du système POS, et demandant une réponse de l'utilisateur.

7. Système selon la revendication 6, le dispositif périphérique étant, lorsqu'aucune réponse au message de confirmation n'est envoyée pendant un intervalle de temps prédéterminé, retiré du système POS et réaffecté à l'autre système POS.

8. Système selon l'une quelconque des revendications de système qui précèdent, les dispositifs comportant un ou plusieurs des éléments suivants : imprimante POS ; affichage en ligne ; balance ; imprimante de reçus ; lecteur ; tiroir-caisse.
